# EUROPEAN PATENT APPLICATION

(11) **EP 4 386 202 A1**
(43) Date of publication of application: **19.06.2024**
(21) Application number: 22214073.3
(22) Date of filing: 16.12.2022
(51) Int. Cl.: F03D 13/10, F03D 13/20

(54) **RETAINING MECHANISM FOR A TOWER SEGMENT OF A WIND TURBINE TOWER, AND MOUNTING METHOD**

(71) Applicant: Siemens Gamesa Renewable Energy A/S, 7330 Brande (DK)
(72) Inventor: Bertelsen, Frederik Jul, 7100 Vejle (DK); Kjeldbjerg, Rene, 7160 Toerring (DK)
(74) Representative: SGRE-Association

(57) **Abstract**

A retaining mechanism (23) for mounting a tower segment (21) of a wind turbine tower (2) comprising a flange (211) at a bottom surface or at a top surface of the tower segment (21), the flange (211) having a through hole (212);
wherein the retaining mechanism (23) comprises a retaining element (232) being at least partially insertable into the through hole (212); and
wherein the retaining element (232) has a first position for holding a stud (24) in a fixed position and a second position for releasing the stud (24)..

## Description

### Field of invention

The present invention relates to a retaining mechanism for mounting tower segments of wind turbine towers. Furthermore, the invention relates to a tower segment comprising at least one retaining mechanism and to a wind turbine tower comprising at least two wind turbine segments. On a final note, the invention relates to a mounting method for mounting two tower segments of a wind turbine tower.

Thus, the present invention may relate to the technical field of retaining elements used in mounting methods, in particular for a wind turbine.

### Art Background

The mounting of different tower segments requires the use of studs, in particular bolts, which are placed into through holes of a first flange of a first tower segment. The studs need to be held in a partially inserted manner, so that the tower segment can be easily aligned to a second tower segment and, in particular, so that the first flange and a second flange of a second tower segment can be aligned such that the through holes of the first flange are concentrically aligned with through holes of the second flange. When the alignment is completed, the studs are released, so that they are inserted into both the through holes of the first flange and the through holes of the second flange, before being locked.

To hold the studs, plastic supports or zip tying mechanisms are known. These means are however cumbersome and require an intensive and time-consuming task to be performed by an operator. Then, both means are often specially designed for a particular stud and/or through hole and are not, not even partially, inserted inside the through hole, so that they either require further fixing means for securing them to the flange or they are not secured to the flange, thus posing a significant safety risk. Also, such plastic supports or zip tying mechanisms are normally placed outside the through hole, thus raising the need for a design taking into consideration the through hole dimensions as a minimum dimension for the plastic support or the zip tying mechanism.

### Summary of the invention

There may be a need for restraining mechanism that allow a more efficient assembly of the tower segments.

A retaining mechanism, a wind turbine segment, a wind turbine and a mounting method are described.

According to a first aspect of the present invention, there is described a retaining mechanism for mounting a tower segment of a wind turbine tower comprising a flange at a bottom surface or at a top surface of the tower segment, the flange having a through hole; wherein the retaining mechanism comprises a retaining element being at least partially insertable into the through hole; and wherein the retaining element has a first position for holding a stud in a fixed position and a second position for releasing the stud.

According to a second aspect of the present invention, there is described a tower segment of a wind turbine tower comprising a flange at a bottom surface or at a top surface of the tower segment, the flange having a through hole; wherein the tower segment further comprises at least one retaining mechanism, in particular according to the first aspect of the present invention.

According to a third aspect of the present invention, there is described a wind turbine comprising at least two tower segments, in particular according to the second aspect of the present invention.

According to a fourth aspect of the present invention, a method for mounting tower segments for a wind turbine tower is provided. The method comprises a step of providing a first tower segment having a first flange at a bottom surface or at a top surface of the first tower segment, a first flange having a first through hole; a step of providing a retaining mechanism with a retaining element, wherein the retaining element is in a first position for holding a stud in a fixed position; a step of inserting the retaining element at least partially in the first through hole; a step of providing a stud and inserting the stud in the first through hole, wherein the stud is hold by the retaining element; a step of providing a second tower segment having a second flange at a bottom surface or at a top surface of the second tower segment, the second flange having a second through hole; a step of placing the first tower segment on top of the second tower segment in such a way that the surface of the first tower segment at which the first flange is provided faces the surface of the second tower segment at which the second flange is provided and that the first through hole and the second through hole are aligned coaxially to each other; a step of shifting the retaining element from the first to a second position, at which the retaining element releases the stud, which thereby is fully inserted in the first through hole and second through hole; and a step of locking the stud to join the first tower segment and the second tower segment.

In the context of the present document, the term "tower segment" may refer to a base, a top or a middle tower segment of a wind turbine tower. The present invention is therefore directed towards retaining mechanisms configured for joining all those elements forming a wind turbine tower, thus also including the base, which is anchored to fundaments, and a top section, to which a nacelle is fixed to.

In the context of the present document, the term "stud" refers to any fixing mean that may be used for joining two tower segments together. In particular, a stud is a bolt comprising a screw and a nut. Such bolts are commonly used for joining tower segments of wind turbine towers.

In the context of the present document, the term "retaining element" refers to a piece of the retaining mechanism being insertable, at least partially, inside a through hole of a flange of a tower segment and being configured to hold, in a first position, a stud in a fixed position so to allow different tower segments and their respective flanges to be properly aligned. The retaining element also has a second position, in which the stud is released after the tower segments and their respective flanges have been properly aligned, so that the stud to be inserted in through holes of both flanges, thus allowing the operator to lock the stud and mount the tower segments together.

The main idea behind the present invention is therefore the design and realization of a retaining mechanism that is easy to implement and to use, when different tower segments are mounted together to form a single wind turbine tower.

A main advantage of the present invention is provided by the fact that the retaining element is at least partially insertable inside the through hole, so that the retaining element and the retaining mechanism are, at least, partially fixed to the flange of the tower segment.

Another advantage is that a further fixing of the retaining mechanism to the flange of the tower segment is not needed anymore, thus reducing the complexity of system and time needed by the operator for mounting two tower segments together.

Another advantage may be the possibility of using a single retaining mechanism for different studs and/or through holes, thus reducing the need of design-specific retaining elements, as this is the case in the prior art. This is due to the fact that the part of the retaining mechanism engaging with the stud is at least partially inserted in the through hole, whereas only the requirement of a maximum dimension, but not of a minimum one, must be satisfied.

### Exemplary Embodiments

According to an embodiment, the retaining element is switchable between the first position and the second position, wherein the retaining mechanism further comprises at least an actuating means configured to switch the retaining element from the first position or the second position to the second position or the first position. In this case, the retaining mechanism is therefore provided with a switching means, that allows the operator to switch the retaining element from its first position to its second position and vice-versa, thus increasing the using comfort of the retaining mechanism.

The actuating means may be switchable, in particular in a reversible manner, between an engaging position, in which the actuating means is engaged with the retaining element and the retaining element is in the first position, and a disengaging position, in which the actuating means is disengaged from the retaining element and the retaining element is in the second position.

The actuating means can comprise, for example, a lever configured to switch the retaining element from its first position to its second position.

According to an embodiment, the retaining element comprises a strap. In such a case, therefore, the retaining element has a simple implementation, which can be obtained with means well known in the art.

It is possible, that the strap forms a belt, which is fasten around a stud when the retaining element is in the first position, and which is unfastened when the retaining element is in the second position.

It is also possible, that the strap forms a supporting structure being insertable inside the through hole and being configured for supporting a stud along an axial direction of a through hole, when the retaining element is in the first position. In this case, the strap forms a sort of a retaining bag, which supports the stud during the mounting procedure of the tower segments.

According to an embodiment of the invention, the strap is made of comprises polyester. In such a case, the strap has good mechanical properties.

According to an embodiment of the invention, when the retaining element is in the first position, the strap is engaged with the actuating means thus holding the stud, and when the retaining element is in the second position, the strap is released from the actuating means.

According to an embodiment of the invention, the strap comprises at least one, preferably two, eyelet configured for engaging with the actuating means, when the retaining element is in the first position. The strap can therefore be easily fixed to the actuating means in the first position, and easily released from the actuating means in the second position.

According to an embodiment of the invention, the actuating means is a steel rod. A simple implementation of the actuating means is therefore possible.

According to an embodiment, the steel rod is movable between an engaging position, in which the steel rod engages with the retaining element and the retaining element is in the first position, and a disengaging position, in which the steel rod is not engaged with the retaining element and the retraining element is in the second position.

According to an embodiment of the invention, the steel rod is U-shaped. Therefore, the rod has a compact form.

According to an embodiment of the invention, the retaining mechanism comprises a locking means configured for locking the retaining element in the first position. Therefore, it is possible to insert the retaining element in a through hole of a flange of a tower segment and lock the retaining element, and thus the retaining mechanism, during transportation of the tower segment. A safe transport of the tower segment with the retaining mechanism is therefore possible. The locking means can be released or disengaged shortly before mounting the tower segments together.

According to a further embodiment, the retaining mechanism also comprising a stud locking means for locking the stud when the retaining element is in the first position. The stud locking means can be then released or disengaged when the retaining element is switched into the second position

According to an embodiment of the invention, the retaining mechanism further comprises a rubber plate. The rubber plate can be provided on a surface of the retaining mechanism that comes into contact with a flange of a tower segment. In such a way, the flange of the tower segment can be protected against damages caused by the retaining mechanism during mounting of the tower segment.

According to a further embodiment, the rubber plate is also configured for providing a slow and controlled release of a stud when the retaining element is in the second position.

Damages caused by the stud during insertion in the through holes can thus be avoided.

According to an embodiment of the invention, the retaining mechanism is configured for holding, when the retaining element is in the first position, studs having a cylindrical form, wherein the studs preferably have a diameter comprised between 42 mm and 80 mm. Thus, the retaining mechanism is highly flexible and can be used with a wide variety of studs and through holes is possible.

According to an embodiment of the invention, the retaining mechanism further comprises fixing means for fixing the retaining mechanism to a flange of a tower segment of a wind turbine. Thus it is possible to fix the retaining mechanism to the flange of the tower segment during transportation, so that the safety of the retaining mechanism is increased.

According to an embodiment of the invention, the retaining mechanism is removable from the tower segment when the retaining element is in the second position, so that the retaining mechanism can be used multiple times.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a schematic section of a wind turbine according to an exemplary embodiment of the invention.
- Figure 2: shows a detailed view of a retaining mechanism according to an embodiment of the present invention,
- Figure 3: wherein the retaining element is in the first position. shows a detailed view of a retaining mechanism according to an embodiment of the present invention, wherein the retaining element is in the second position.
- Figures 4: shows a simplified diagram for mounting two tower segments of a wind turbine tower according to an exemplary embodiment of the present invention.

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element(s) as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

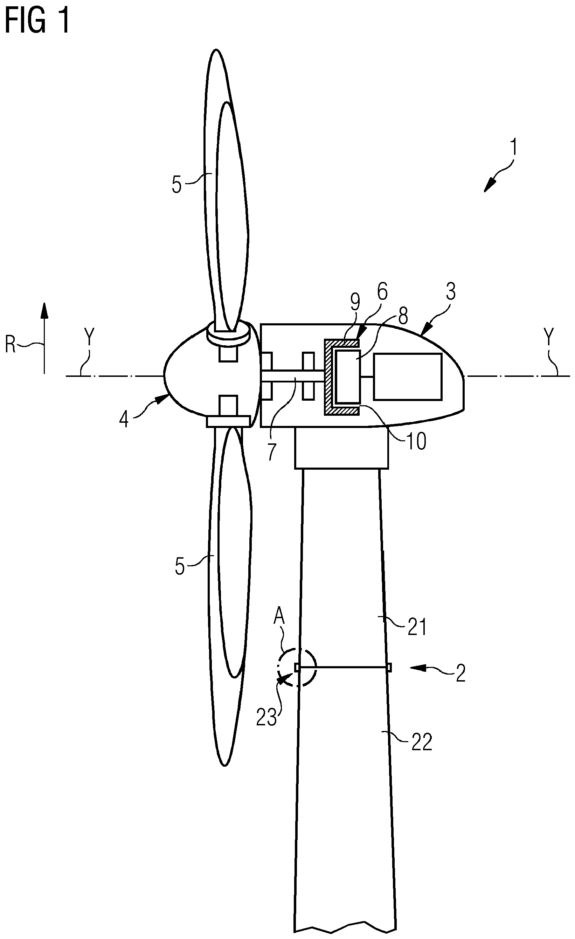

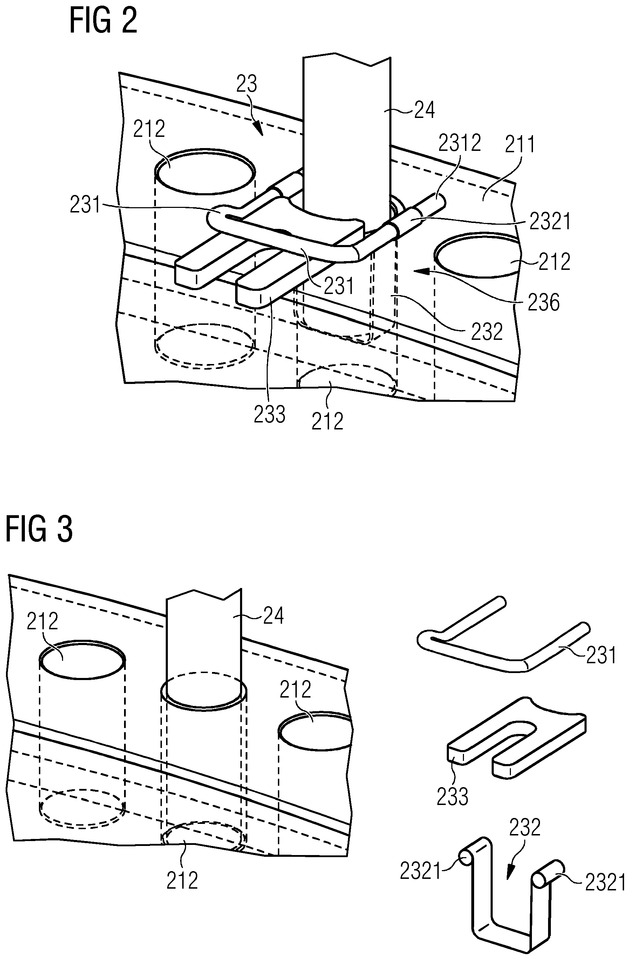

**Figure** 1 shows a wind turbine 1. The wind turbine 1 comprises a tower 2, having tower segments 21 and 22, which are mounted together by using studs 24 inserted into through holes 212 of flange 211 and the corresponding flange of tower segment 22 (see detailed **Figure 2****,** flange of tower segment 22 not shown). The tower 2 is mounted on a non-depicted fundament. A nacelle 3 is arranged on top of the tower 2. The wind turbine 1 further comprises a wind rotor 4 having two, three or more blades 5 (in the perspective of **Figure 1** only two blades 5 are visible). The wind rotor 4 is rotatable around a longitudinal rotation axis Y, which is coincident with an axial direction, also referred to as Y. When not differently specified, the terms axial, radial and circumferential in the following are made with reference to the longitudinal axis Y. The blades 5 extend radially in a radial direction R with respect to the rotational axis Y. The wind turbine 1 comprises a permanent magnet electric generator 6. According to other possible embodiments of the present invention (not represented in the attached figures), the present invention may be applied to other types of electric machine design, e.g. induction, synchronous, etc. The wind rotor 4 is rotationally coupled with the permanent magnet generator 6 by means of a rotatable main shaft 7. The rotatable main shaft 7 extends along the rotational axis Y. The wind rotor 4 may also be rotationally coupled directly with the permanent magnet generator 6 (direct-drive generator configuration). The permanent magnet electric generator 6 includes a stator 8 and a rotor 9. The rotor 9 is rotatable with respect to the stator 8 about the rotation axis Y. The rotor 9 is radially external with respect the stator 8 and rotatable about the rotational axis Y. The present invention may however also include notshown embodiments in which the rotor 9 is radially internal with respect to the stator 8. A circumferential air gap 10 is provided between the stator 8 and the rotor 9.

**Figure 2** shows a detailed view of a retaining mechanism 23 used for mounting the tower segments 21, 22.

The retaining mechanism 23 according to **Figure 2** comprises an actuating means 231, in form of a U-shaped steel rod having a top bar 2311 and side bars 2321, and a retaining element 232 in form of a strap. In **Figure 2** the retaining element 232 is in a first position, in which the retaining element 232 is partially inserted in a through hole 212 of a flange 211 of the tower segment 21 and in which the retaining element 232 holds a stud 24 in a fixed position such that the stud 24 is only partially, not completely, inserted in the through hole 212. In such configuration, it is particularly easy to transport the tower segment 21 having studs 24 in a premounted position, which still allows alignment with the tower segment 22 during the mounting procedure of the wind turbine tower 2.

In the present embodiment, the retaining element 232 is a strap, which might be made of polyester, being held by the actuating means 231 in the first position in such a way that it forms a supporting structure, like a bag, for the stud 24.

The retaining element 232 has two eyelets 2321, in which the side bars 2312 of the actuating means 231 are engaged, when the retaining element 232 is in the first position.

Furthermore, a rubber plate 233 is provided underneath the top bar 2311 of the actuating means 231. The rubber plate 233 has the function to protect the surface 213 of the flange 211, when the stud 24, here a screw having a head, is released and slides into the through hole 212. Also, the rubber plate 233 functions as a sound absorber and as a breaking device for allowing the stud 24 to have a controlled insertion in the through hole 212.

The retaining mechanism 23 according to **Figure 2** also comprises locking means and a fixing means (not shown). The locking means is configured for locking the actuating means 231 and the retaining element 232, when the retaining element 232 is in a first position. Fixing means is configured to fix the retaining element 23 to the flange 211 during the transport of the tower section 21, in order to have a safer transport of the tower section 21 prior to mounting.

In **Figure 3** the retaining mechanism 23 shown in **Figure 2** is shown when the retaining element 232 is in the second position. In this case, the locking means has been removed and the actuating means 231 is actuated, so that the side bars 2312 do not engage anymore with the eyelets 2321 of the retaining element 232. The stud 24 can therefore be fully inserted inside the through hole 212 and the corresponding through hole (not shown) of the flange of the tower segment 22 placed on the bottom of the tower segment 21. After the stud 24 is fully inserted, it can be locked, for example by using a nut to have a bolt, thus coupling the two tower segments 21, 22 safely together.

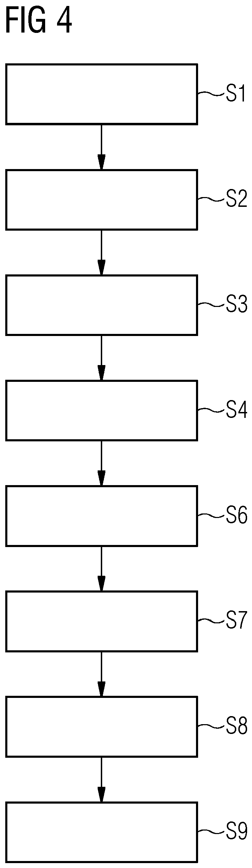

**Figure 4** shows, schematically, a diagram for mounting the two tower segments 21, 22 of the wind turbine tower 2.

The method comprises a first step S1, in which the first tower segment 21 having a first flange 211 at a bottom surface of the first tower segment 21 is provided, wherein the first flange 211 has a first through hole 212.

In a second step S2, a retaining mechanism 23 with a retaining element 232 according to **Figure 2** is provided. The retaining element 232 is in the first position for holding a stud 24 in a fixed position. To do this, the side bars 2312 of the actuating means 231 are inserted into the eyelets 2321 of the retaining element 232.

In a third step S3, the retaining element 232 of the retaining mechanism 23 is inserted at least partially in the first through hole 212 of the first flange 211. If locking means and fixing means are provided, then they can be used at this step for locking the retaining element 232 in the first position and for fixing the retaining mechanism 23 to the flange 211.

In a fourth step S4, the stud 24 is provided and inserted the in the first through hole 212. Thereby, the stud 24 is hold by the retaining element 232 of the retaining mechanism 23.

In a fifth step S5, the second tower 22 segment is provided. The second tower segment 22 has, akin to the first tower segment 21, a second flange at a bottom surface or at a top surface of the second tower segment 22, wherein the second flange has a second through hole.

In a sixth step S6, the first tower segment 21 is placed on top of the second tower segment 22 in such a way that the first flange 211 and the second flange are facing each other and that the first through hole 212 is aligned coaxially with the second through hole.

In a seventh step S7, if the locking means is present, then the locking means is removed. After that, the actuating means 231 can be actuated, in that the rod bas is shifted along the direction shown by the arrow 236 in **Figure 2****.** In this way, the side bars 2312 of the actuating means 231 are pulled out of the eyelets 2321 of the retaining element 232. Due to this, the retaining element 232 is pushed down by the stud 24 due to gravity. The retaining element 232 is therefore now in the second position, in which it releases the stud 24. The stud 24 can therefore be now fully inserted in the first through hole 212 of the first flange 211 and in the corresponding second through hole of the second flange. The movement of the stud 24 can be slowed down and controlled by the rubber plate 233 and by the retaining element 232, which exercises a friction against the inner surface of the through hole 212. Also, the rubber plate 233 protects the surface 213 of the flange 211 from the stud 24 and from the head of the stud 24, thus minimizing the risk of damages.

In an eight step S8, the stud 24 is locked to join the first tower segment 21 and the second tower segment 22.

In a ninth and final step S9, the retaining element 232 is collected, the rubber plate 233 is removed from the flange 211 and the other elements of the retaining mechanism 23 are collected, so that the retaining mechanism can be used again.

Independent of the grammatical term usage, individuals with male, female or other gender identities are included within the term.

## Claims

1. A retaining mechanism (23) for mounting a tower segment (21) of a wind turbine tower (2) comprising a flange (211) at a bottom surface or at a top surface of the tower segment (21), the flange (211) having a through hole (212);
wherein the retaining mechanism (23) comprises a retaining element (232) being at least partially insertable into the through hole (212); and
wherein the retaining element (232) has a first position for holding a stud (24) in a fixed position and a second position for releasing the stud (24).

2. Retaining mechanism (23) according to claim 1, wherein the retaining element (232) is switchable between the first position and the second position, wherein the retaining mechanism (23) further comprises at least an actuating means (231) configured to switch the retaining element (232) from the first position or the second position to the second position or the first position.

3. Retaining mechanism (23) according to claim 1 or 2, wherein the retaining element (232) comprises a strap.

4. Retaining mechanism (23) according to claim 3, wherein the strap (232) is made of comprises polyester.

5. Retaining mechanism (23) according to claim 3 or 4, wherein
when the retaining element (232) is in the first position, the strap is engaged with the actuating means (231), and
when the retaining element is in the second position, the strap is released from the actuating means.

6. Retaining mechanism (23) according to claim 5, wherein the strap (232) comprises at least one, preferably two, eyelet (2321) configured for engaging with the actuating means (231), when the retaining element is in the first position.

7. Retaining mechanism (23) according to any of claims 2 to 6, wherein the actuating means (231) is a U-shaped steel rod.

8. Retaining mechanism (23) according to any of claims 1 to 7, wherein the retaining mechanism (23) comprises a locking means configured for locking the retaining element (232) in the first position.

9. Retaining mechanism (23) according to any of claims 1 to 8, wherein the retaining mechanism (23) further comprises a rubber plate (233).

10. Retaining mechanism (23) according to any of claims 1 to 9, wherein the retaining mechanism (23) is configured for holding, when the retaining element (232) is in the first position, studs (24) having a cylindrical form, wherein the studs (24) preferably have a diameter comprised between 42 mm and 80 mm.

11. Retaining mechanism (23) according to any of claims 1 to 9, wherein the retaining mechanism (23) further comprises fixing means for fixing the retaining mechanism (23) to a flange (211) of a tower segment (21) of a wind turbine tower (2) .

12. Tower segment (21) of a wind turbine tower (2) comprising a flange (211) at a bottom surface or at a top surface of the tower segment (21), the flange (211) having a through hole (212); wherein the tower segment (21) further comprises at least one retaining mechanism (23) according to any of claims 1 to 11.

13. Tower segment (21) according to claim 12, wherein the retaining mechanism (23) is removable from the tower segment (21) when the retaining element (232) is in the second position.

14. Wind turbine tower (2) comprising at least two tower (21, 22) segments according to any of the claims 12 to 13.

15. Method for mounting tower segments (21, 22) for a wind turbine tower (2), the method comprising:
providing a first tower segment (21) having a first flange (211) at a bottom surface or at a top surface of the first tower segment (21), a first flange (211) having a first through hole (212);
providing a retaining mechanism (23) with a retaining element (232), wherein the retaining element (231) is in a first position for holding a stud (24) in a fixed position;
inserting the retaining element (232) at least partially in the first through hole (23);
providing a stud (24) and inserting the stud (24) in the first through hole (212), wherein the stud (24) is hold by the retaining element (232);
providing a second tower segment (22) having a second flange at a bottom surface or at a top surface of the second tower segment, the second flange having a second through hole;
placing the first tower segment (21) on top of the second tower segment (22) in such a way that the surface of the first tower segment (21) at which the first flange (211) is provided faces the surface of the second tower segment (22) at which the second flange is provided and that the first through hole (212) and the second through hole are aligned coaxially to each other;
shifting the retaining element (232) from the first to a second position, at which the retaining element (232) releases the stud (24), which thereby is fully inserted in the first through hole (212) and second through hole;
locking the stud (24) to join the first tower segment (21) and the second tower segment (22).
